(19) Europäisches Patentamt
European Patent Office
Office européen des brevets

(11) EP 4 368 957 A1

(12) EUROPEAN PATENT APPLICATION
published in accordance with Art. 153(4) EPC

(43) Date of publication:
15.05.2024 Bulletin 2024/20

(51) International Patent Classification (IPC):
G01M 3/06 (2006.01)

(21) Application number: 22866999.0

(52) Cooperative Patent Classification (CPC):
G01M 3/06

(22) Date of filing: 27.05.2022

(86) International application number:
PCT/JP2022/021800

(87) International publication number:
WO 2023/037669 (16.03.2023 Gazette 2023/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.09.2021 JP 2021147978

(71) Applicant: DAIKIN INDUSTRIES, LTD.
Osaka-Shi, Osaka 530-0001 (JP)

(72) Inventors:
• KODAMA, Akira
Osaka-shi, Osaka 530-8323 (JP)
• MATSUMOTO, Yoji
Osaka-shi, Osaka 530-8323 (JP)
• TANAKA, Tomoaki
Osaka-shi, Osaka 530-8323 (JP)
• SATO, Naoyuki
Osaka-shi, Osaka 530-8323 (JP)

(74) Representative: Goddar, Heinz J.
Boehmert & Boehmert
Anwaltspartnerschaft mbB
Pettenkoferstrasse 22
80336 München (DE)

(54) INSPECTION SYSTEM AND INSPECTION METHOD

(57) There are included a conveyance unit (25) that moves an object (10) in a first direction in water, the conveyance unit (25) moving a plurality of the objects (10); an imaging unit (30) that images the object (10) that is being conveyed by the conveyance unit (25); and a control unit (40) that specifies a bubble (B) on the basis of image data of the object (10) imaged by the imaging unit (30), the bubble (B) being generated from the object (10).

FIG.1

EP 4 368 957 A1

**Description**

Technical Field

The present disclosure relates to an inspection system and an inspection method.

Background Art

PTL 1 discloses an inspection system that immerses a die-cast product in a water tank and inspects the die-cast product on the basis of a bubble that is generated from the die-cast product.

Citation List

Patent Literature

PTL 1: Japanese Unexamined Patent Application Publication No. 2018-155682

Summary of Invention

Technical Problem

In PTL 1, an object is input in the water tank by an actuator, and after inspection of the object is completed, the object is taken out again from the water tank (Fig. 2 of PTL 1). Therefore, it is not possible to inspect a plurality of objects continuously.

An object of the present disclosure is to improve efficiency in inspection of objects.

Solution to Problem

A first aspect is directed to an inspection system, the inspection system including a conveyance unit (25) configured to move an object (10) in a first direction in water, the conveyance unit (25) moving a plurality of the objects (10); an imaging unit (30) configured to image the object (10) that is being conveyed by the conveyance unit (25); and a control unit (40) configured to specify, based on image data of the object (10) imaged by the imaging unit (30), a bubble (B) that is generated from the object (10).

In the first aspect, the conveyance unit (25) moves a plurality of the objects (10) in the first direction. The imaging unit (30) images, as appropriate, the object (10) that is being conveyed. On the basis of the image data of the object (10), the control unit (40) specifies the bubble (B) that is generated from the object (10). In the present aspect, it is possible by moving a plurality of the objects (10) by the conveyance unit (25) to continuously determine whether a bubble is generated from the object (10). Consequently, inspection efficiency can be improved.

According to a second aspect, in the first aspect, the control unit (40) specifies the bubble (B) by using, as a parameter, a first index indicating a change in a position of the object (10) due to a movement of the object (10) in the first direction.

In the second aspect, the bubble (B) is specified in consideration of a change in the position of the object (10) in the first direction. This is because, when the object (10) moves in the first direction, a coordinate position of a bubble candidate in the image data changes with the movement of the object (10).

According to a third aspect, in the second aspect, when a displacement between positions of bubble candidates (C) in two image data of the object (10) imaged by the imaging unit (30) is within a predetermined range, the control unit (40) performs a first process of excluding the bubble candidates (C) in the two image data from targets for specification of the bubble (B), and, in the first process, the control unit (40) corrects based on the first index the position of the bubble candidate (C) in one of the two image data that is imaged later.

In the first process, when a displacement between positions of the bubble candidates (C) in two image data is within a predetermined range, the control unit (40) in the third aspect excludes the bubble candidates (C) in the two image data from targets for specification of the bubble (B). This is because, when the displacement between the positions of the bubble candidates (C) is within the predetermined range, the bubble candidates (C) are each highly likely to be a portion (for example, a light reflecting portion) of the object (10). Meanwhile, when the bubble candidate (C) is a portion of the object (10), the bubble candidate (C) changes with the movement of the object (10) in the first direction. Thus, in the first process, the control unit (40) corrects on the basis of the first index the position of the bubble candidate (C) in one of the two image data that is imaged later. Consequently, the movement of the object (10) can be considered, and it is thus possible to suppress erroneous determination in which a portion of the object (10) is specified as the bubble (B).

According to a fourth aspect, in any one of the first to third aspects, when a condition is satisfied, the condition indicating that a luminance difference between bubble candidates (C) in two image data of the object (10) imaged by the imaging unit (30) is smaller than a predetermined value, the control unit (40) performs a second process of setting, as targets for specification of the bubble (B), the bubble candidates (C) in the two image data.

In the fourth aspect, when the condition indicating that the luminance difference between the bubble candidates (C) in the two image data is smaller than the predetermined value is satisfied, the control unit (40) determines that the bubble candidates (C) in the two image data coincide with each other, and sets these bubble candidates (C) as targets for specification of the bubble (B).

According to a fifth aspect, in any one of the first to fourth aspects, the control unit (40) specifies a leakage point of the object (10) based on a position of the bubble (B) that is present at a lowest position in a plurality of image data in which the identical bubble (B) is specified.

In the fifth aspect, when there are a plurality of image data in which the identical bubble (B) is specified, the position of the bubble (B) that is present at the lowest position is closest to the leakage point of the object (10). Therefore, the control unit (40) specifies the leakage point of the object (10) on the basis of the position of this bubble (B).

According to a sixth aspect, in the fifth aspect, the control unit (40) specifies a leakage point of the object (10) based on data in which a position of the bubble (B) and a leakage point of the object (10) are associated with each other and the position of the bubble (B) that is present at the lowest position.

In the sixth aspect, by additionally using the data in which a position of the bubble (B) and a leakage point of the object (10) are associated with each other, it is possible to classify a leakage point of the object (10).

According to a seventh aspect, in any one of the first to sixth aspects, the control unit (40) specifies the bubble (B) that is generated from the object (10) by using a CNN (Convolutional Neural Network) or template matching.

In the seventh aspect, it is possible by using the CNN or the template matching to improve accuracy of specification of the bubble (B).

According to an eighth aspect, in any one of the first to seventh aspects, there is included a notification unit (45) configured to notify that the bubble (B) is generated from the object (10) or that the object (10) has a leakage, in response to specification of the bubble (B) by the control unit (40).

In the eighth aspect, an inspector or the like can be notified by the notification unit (45) of generation of the bubble (B) or a leakage of the object (10).

According to a ninth aspect, in any one of the first to eighth aspects, the conveyance unit (25) moves the object (10) in a horizontal direction as the first direction.

In the ninth aspect, the conveyance unit (25) moves the object (10) in the horizontal direction in water. Consequently, the configuration of the conveyance unit (25) can be simplified.

A tenth aspect is directed to an inspection method, the inspection method including moving a compressor (10) in a first direction in water by a conveyance unit (25), the compressor (10) including a hermetically sealed casing (11); imaging the object (10) by an imaging unit (30), the object (10) being conveyed by the conveyance unit (25); and specifying a bubble (B) by a control unit (40) based on image data of the object (10) imaged by the imaging unit (30), the bubble (B) being generated from the object (10).

In the tenth aspect, a bubble that is generated from the compressor (10) can be specified. Consequently, a leakage of the compressor (10) can be inspected.

According to an eleventh aspect, in the tenth aspect, there is included specifying the bubble (B) by using, as a parameter, a first index indicating a change in a position of the compressor (10) due to a movement of the compressor (10) in the first direction.

In the eleventh aspect, the bubble (B) is specified in consideration of a change in the position of the compressor (10) in the first direction. This is because, when the compressor (10) moves in the first direction, the coordinate position of a bubble candidate in image data changes with the movement of the compressor (10).

Brief Description of Drawings

[Fig. 1] Fig. 1 is a schematic plan view of an inspection system according to an embodiment.
[Fig. 2] Fig. 2 is an enlarged front view of a compressor in a water tank.
[Fig. 3] Fig. 3 is a block diagram of an inspection system.
[Fig. 4] Fig. 4 is a first flowchart of an inspection method.
[Fig. 5] Fig. 5 is a second flowchart of an inspection method.
[Fig. 6] Fig. 6 is an illustration of one example of a bubble candidate in image data.
[Fig. 7] Fig. 7 is an illustration of a change in a position of a reflecting portion of a compressor in two image data.
[Fig. 8] Fig. 8 is an illustration of a change in a position of a bubble in two image data.

[Fig. 9] Fig. 9 is an illustration of a change in a position of a bubble in three image data.

[Fig. 10] Fig. 10 is an illustration of one example of data in which leakage points of an object are associated with positions of a bubble.

Description of Embodiments

Hereinafter, an embodiment of the present disclosure will be described in detail with reference to the drawings. Note that the present disclosure is not limited to the embodiment described below and can be variously changed without departing from the technical idea of the present disclosure. Since the drawings are intended to conceptually explain the present disclosure, dimensions, ratios, or numbers may be exaggerated or simplified, as necessary, for easy understanding.

Specific numerical values of various parameters described in the embodiment of the present disclosure are merely examples and are not limited thereto.

(1) Configuration of Inspection System

An inspection system (20) according to an embodiment inspects presence or absence of a leakage in an object. The object in the present example is a hermetically sealed compressor (10). The inspection system (20) specifies a bubble (B) that is generated from the compressor (10) in water. On the basis of this bubble (B), the inspection system (20) determines a leakage in the compressor (10).

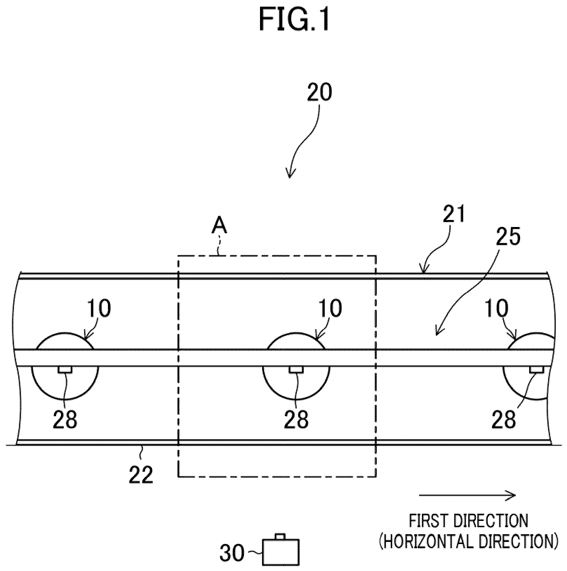

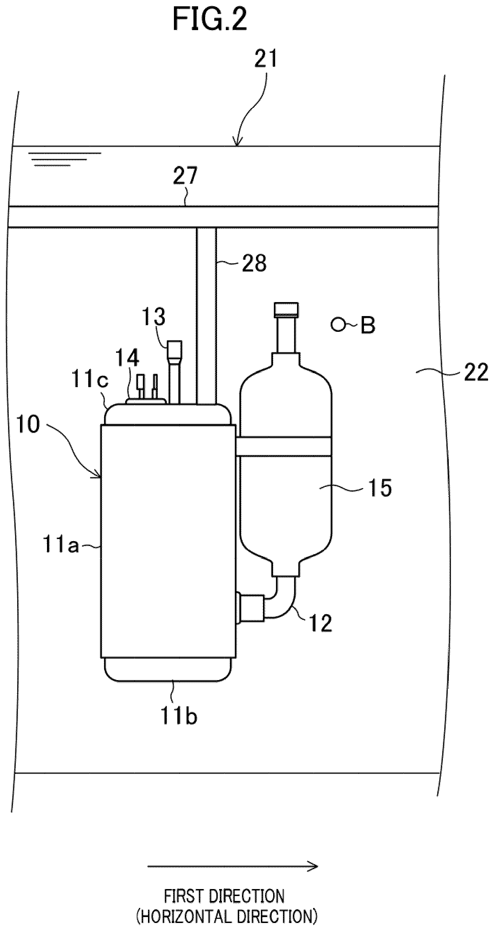

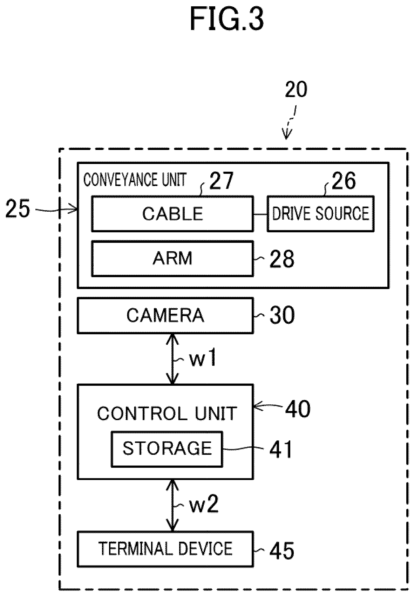

As illustrated in Fig. 1 and Fig. 2, the inspection system (20) includes a water tank (21), a conveyance unit (25), and a camera (30). As illustrated in Fig. 3, the inspection system (20) includes a control unit (40) and a terminal device (45).

Water is stored in the water tank (21). A side wall (22) of the water tank (21) is made of a transparent material (a resin, glass, or acrylic material, or the like).

The conveyance unit (25) includes a drive source (26), a cable (27) that is to be driven by the drive source (26), and a plurality of arms (28) supported by the cable (27). The drive source (26) is constituted by, for example, an electric motor. The cable (27) extends along the side wall (22) of the water tank (21) in a first direction (horizontal direction in the present example). The drive source (26) conveys the cable (27) in the first direction. The upper end of each of the plurality of arms (28) is fixed to the cable (27). The lower end of each of the plurality of arms (28) holds the compressor (10). When the cable (27) is driven by the drive source (26), the compressors (10) move together with the cable (27) and the arms (28) in the horizontal direction. Consequently, a plurality of the compressors (10) sequentially pass, in the water, through an imaging region (A) of the camera (30).

The camera (30) serving as an imaging unit is disposed outside the water tank (21). The camera (30) picks up a moving image of the imaging region (A) inside the water tank (21). The camera (30) images the compressor (10) in the imaging region (A) and obtains image data of the compressor (10). The compressor (10) is thus included in the image data. When the compressor (10) has a leakage, the image data includes a bubble (B) that has been generated from the compressor (10).

The camera (30) and the control unit (40) are connected to each other through a first communication line (W1). The first communication line (W1) is wired or wireless. The camera (30) images the imaging region (A) on the basis of an instruction from the control unit (40). The moving image picked up by the camera (30) is constituted by a plurality of image data that is a still image. An interval t between the continuous image data is 0.1 seconds. In other words, the frame rate of the image data obtained by the camera (30) is 10 fps. The camera (30) transmits the image data of the imaged compressor (10) to the control unit (40) through the first communication line (W1).

The control unit (40) includes a MCU (Micro Control Unit or micro controller unit), an electric circuit, and an electronic circuit. The MCU includes a CPU (Central Processing Unit or central arithmetic processing device), a memory, and a communication interface. Various programs that are to be executed by the CPU are stored in the memory.

The control unit (40) receives the image data obtained by the camera (30). On the basis of the image data, the control unit (40) specifies the bubble (B) that is generated from the compressor (10). On the basis of the specified bubble (B), the control unit (40) determines a leakage of the compressor (10).

The control unit (40) includes a storage (41). The storage (41) includes a HDD (Hard Disk Drive), a RAM (Random Access Memory), a SSD (Solid State Drive), and the like.

Image data obtained by the camera (30) is to be sequentially stored in the storage (41). In addition, data (hereinafter also referred to as first data) in which positions (coordinates) of the bubble (B) are associated with leakage points of the compressor (10) is stored in the storage (41). An operator previously stores in the storage (41) the first data corresponding to the compressor (10) that is to be inspected. The control unit (40) specifies a leakage point of the compressor (10) on the basis of a position of the specified bubble (B) and the first data.

The terminal device (45) is a terminal, such as a personal computer, that is to be used by an operator. The terminal device (45) may be a tablet, a smartphone, or the like and may be a terminal dedicated to inspection.

The control unit (40) and the terminal device (45) are connected to each other through a second communication line (W2). The second communication line (W2) is wired or wireless. The control unit (40) and the terminal device (45) may be connected to each other through a network.

When determined that the compressor (10) has a leakage, the control unit (40) outputs a signal that indicates the leakage to the terminal device (45). The terminal device (45) serving as a notification unit notifies an operator that the compressor (10) has a leakage by display on a screen, light, sound, or the like.

(2) Overview of Compressor

An overview of the compressor (10), which is an object, will be described with reference to Fig. 2.

The compressor (10) is a rotary fluid machinery. The compressor (10) is of a so-called high-pressure dome type. The compressor (10) includes a casing (11), a suction pipe (12), a discharge pipe (13), and a terminal (14). The casing (11) is a hollow hermetically sealed container. The casing (11) includes a body (11a), a bottom portion (11b), and a top portion (11c). The body (11a) has a vertically elongated cylindrical shape whose two ends in an axial direction are open. The bottom portion (11b) closes an open portion of the body (11a) on one end (the lower end in Fig. 2) side in a longitudinal direction (the axial direction). The top portion (11c) closes an open portion of the body (11a) on the other end (the upper end in Fig. 2) side in the longitudinal direction (the axial direction).

The suction pipe (12) is fixed to the body (11a). The suction pipe (12) extends in a radial direction through a lower portion of the body (11a). The suction pipe (12) is provided with an accumulator (15). The accumulator (15) is a container in which liquid refrigerant is to be stored. The suction pipe (12) guides the refrigerant to the inside of a cylinder of a compression mechanism.

The discharge pipe (13) is fixed to the top portion (11c). The discharge pipe (13) extends in the axial direction through the top portion (11c). The discharge pipe (13) guides the refrigerant that has been compressed at the compression mechanism to the outside of the casing.

The terminal (14) is fixed to the top portion of the casing (11). The terminal (14) includes a relay terminal for guiding electric power of a power supply circuit to the electric motor.

The electric motor, a drive shaft, and the compression mechanism are accommodated (not illustrated) in the inside of the casing (11). When the electric motor rotationally drives the drive shaft, a piston rotates in the inside of the cylinder of the compression mechanism. Consequently, the fluid (refrigerant) flows into the inside of the cylinder through the suction pipe. The compression mechanism compresses the refrigerant. The refrigerant compressed at the compression mechanism flows out to the inside of the casing, and then flows out to the outside of the casing through the discharge pipe.

(3) Operation of Inspection System

An operation of the inspection system (20) will be described in detail.

During an operation of the inspection system (20), the conveyance unit (25) moves the cable (27) in the first direction. Consequently, a plurality of the compressors (10) that are supported by a corresponding one of the arms (28) of the cable (27) sequentially pass through the imaging region (A). The camera (30) picks up a monochrome moving image of the compressor (10) that passes through the imaging region (A). The camera (30) sequentially sends image data of the imaged compressor (10) to the control unit (40). The camera (30) may pick up a color moving image of the compressor (10).

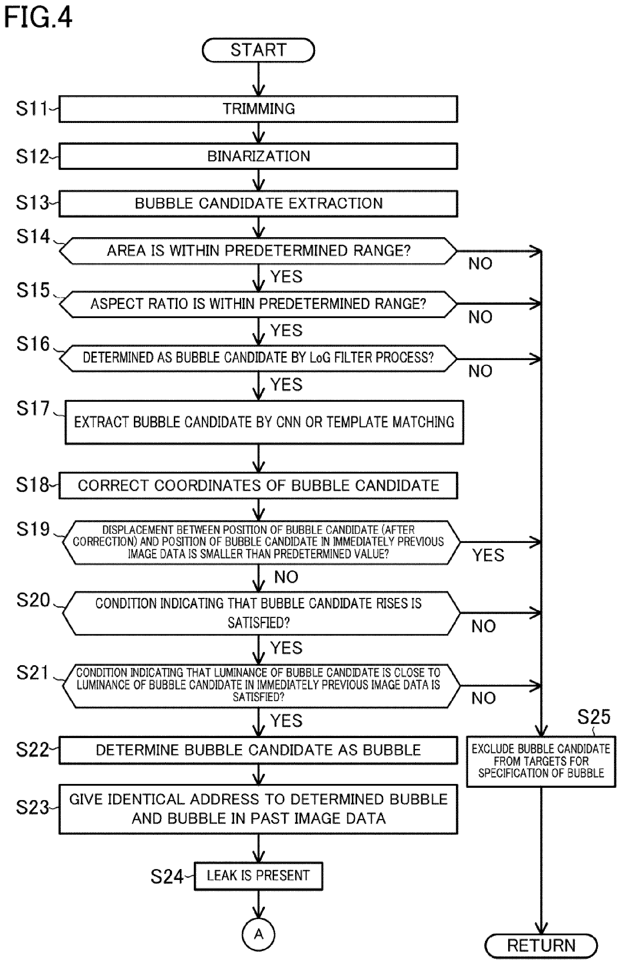

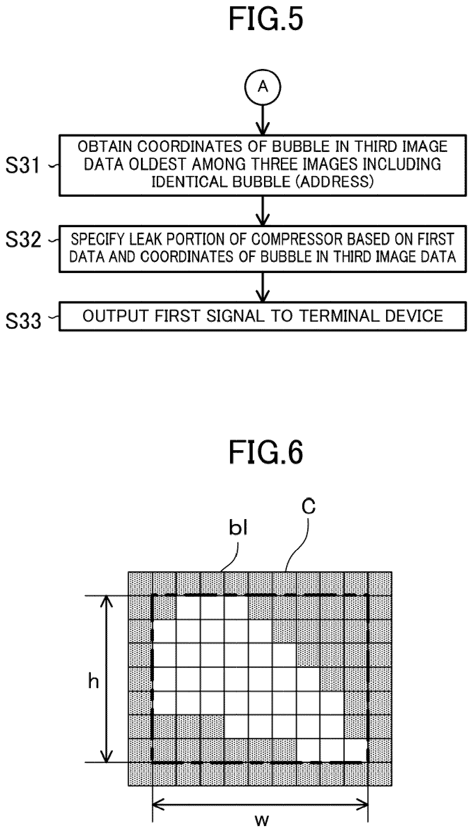

When the image data is obtained by the control unit (40) from the camera (30), the control unit (40) determines whether the compressor (10) has a leakage, in accordance with the steps illustrated in Fig. 4 and Fig. 5. Note that the image data is an aggregate of a plurality of subdivided pixels.

In a step S11, the control unit (40) trims the image data. The control unit (40) deletes an unnecessary region of the image data in the step S11. The unnecessary region includes, for example, a region outside the water tank (21) and a region far away from the compressor (10).

In a step S12, the control unit (40) performs binarization. Specifically, the control unit (40) performs the binarization on the basis of a luminance value of the image data. When the range of the luminance value of the image data is the range of 0 to 255, the threshold value of the luminance value in the binarization is set to, for example, 200. In this case, the control unit (40) changes the luminance value of, among the pixels of the image data, each pixel having a luminance value of 200 or more, to 255. The control unit (40) changes the luminance value of, among the pixels of the image data, each pixel having a luminance value of less than 200, to 0. Through this binarization, the image data is substantially converted into image data that is constituted by white pixels and black pixels.

In a step S13, the control unit (40) performs blob analysis and extracts, as a bubble candidate (C), a region of a white blob in the image data. Through this process, the area and the circumscribed rectangle of the bubble candidate (C) can be obtained. Fig. 6 is an illustration of an example of the bubble candidate (C) in image data. One rectangular block represents one pixel.

In a step S14, on the basis of the area of the bubble candidate (C), the control unit (40) determines whether to exclude the bubble candidate (C) from targets for specification of a bubble. Specifically, in the step S14, the control unit (40) obtains the area of a blob (bl) constituted by white pixels in the image data (refer to Fig. 6) that has been subjected to the process in the step S13. In the step S14, when this area is within a predetermined range, the control unit (40) maintains the bubble candidate (C) as a target for specification of a bubble. In the step S14, when this area is outside the predetermined range, the control unit (40) excludes the bubble candidate (C) from targets for specification of a bubble (step S25).

In a step S15, on the basis of the aspect ratio of the blob (bl) constituted by the white pixels, the control unit (40) determines whether to exclude the bubble candidate (C) from targets for specification of a bubble. Specifically, in the step S15, the control unit (40) extracts the circumscribed rectangle (a portion surrounded by a dash-dotted line in Fig. 6) of the blob (bl). The control unit (40) obtains an aspect ratio h/w of a length h in a lengthwise direction and a length w in a crosswise direction of the circumscribed rectangle. Here, the length h corresponds to the maximum height of the bubble candidate (C) in the vertical direction. The length w corresponds to the maximum width of the bubble candidate (C) in the horizontal direction. In the step S15, when h/w is less than a predetermined value (for example, 0.5), the control unit (40) excludes the bubble candidate (C) from targets for specification of a bubble (step S25). In the step S15, when h/w is larger than a predetermined value (2.0), the control unit (40) excludes the bubble candidate (C) from targets for specification of a bubble (step S25). In other words, in the step S15 in the present example, when h/w is within the range of 0.5 to 2.0, the control unit (40) maintains the bubble candidate (C) as a target for specification of a bubble.

In a step S16, the control unit (40) uses a LoG (Laplacian of Gaussian) filter to determine the bubble candidate (C) The control unit (40) obtains the luminance of each pixel of target data. The LoG filter is a filter corresponding to a general bubble luminance distribution. A bubble has a feature in which the luminance is high at the center of the bubble and in which the luminance decreases from the center toward the outer peripheral side thereof. In the LoG filter, numerical values corresponding to coordinates of pixels of the bubble candidate (C) are set so as to correspond to this feature of the luminance of the bubble. Specifically, in the LoG filter, the numerical value at the center thereof is low, and the numerical value increases toward the outer peripheral side thereof. In the LoG filter in the present example, the numerical value on the center side is a large value in the negative direction, and the numerical value on the outer peripheral side is a small value in the negative direction or a positive value. In the step S16, the control unit (40) uses the LoG filter and performs a convolution arithmetic operation on the bubble candidate (C).

Specifically, the control unit (40) multiplies the luminance of each of the pixels of the bubble candidate (C) by a numerical value corresponding to the coordinates of the each of the pixels of the LoG filter. Next, the control unit (40) obtains a value N after a filter process by calculating the sum of values obtained by the multiplication of each of all the pixels of the bubble candidate (C). For example, when the luminance of the bubble candidate (C) is close to the feature of a bubble, the value N obtained here is relatively small, for example, a negative value. On the contrary, when the luminance of the bubble candidate (C) is far from the feature of a bubble, the value N obtained here is relatively large, for example, a positive value. When the value N after the filter process is smaller than a predetermined threshold (for example, 0), the control unit (40) maintains the bubble candidate (C) as a target for specification of a bubble. When the value N after the filter process is equal to or larger than a threshold (for example, 0), the control unit (40) excludes the bubble candidate (C) from targets for specification of a bubble (step S25).

In a step S17, the control unit (40) extracts the bubble candidate (C) separately from the steps S12 to S16 by a CNN or template matching. The CNN and the template matching have an advantage that a bubble can be specified without the binarization in the step S12.

The control unit (40) extracts the bubble candidate (C) from image data on the basis of a learned model (CNN model) created by the convolutional neural network (CNN). Image data that includes a bubble is used as teacher data for constructing the CNN model. The constructed CNN model is stored in the storage (41) of the control unit (40). Using the CNN model, the control unit (40) extracts, as the bubble candidate (C), a portion in the image data, the portion being similar to the bubble in the teacher data.

The control unit (40) may use, instead of the CNN, template matching to extract the bubble candidate (C) from the image data. In this case, the control unit (40) compares target image data (target data) with previously prepared image data (comparison data) that includes a bubble. Specifically, when the concordance rate between the luminance of a portion estimated to be a bubble in the target data and the luminance of the bubble portion in the comparison data is 75% or more, the control unit (40) extracts the portion in the target data as the bubble candidate (C). Strictly, the control unit (40) obtains a concordance rate between the luminance of each of the pixels of the target data and the luminance of each of pixels of the comparison data corresponding to these pixels of the target data. When the average value of the concordance rates is 75% or more, this portion is extracted as the bubble candidate (C).

In a step S18 and a step S19, a process for preventing a portion (for example, a light reflecting portion of a pipe) that is not a bubble from being erroneously detected as a bubble in image data is performed.

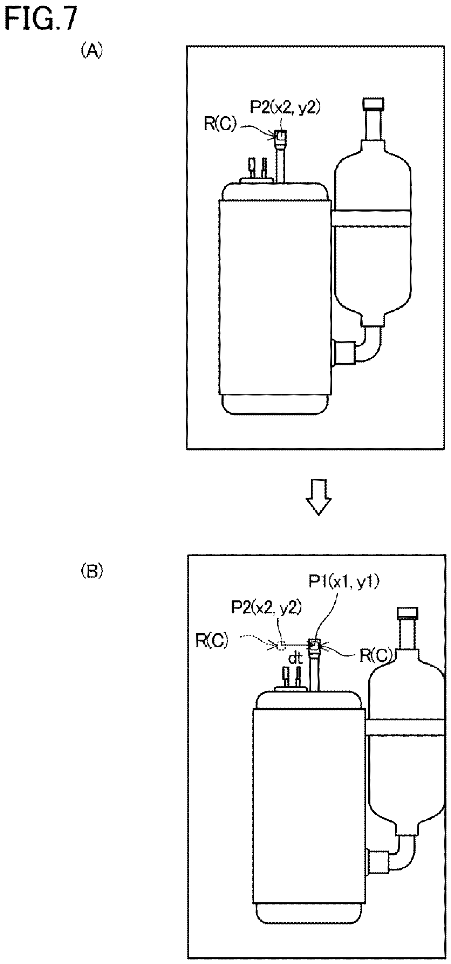

As illustrated in Fig. 7, when a portion of a pipe of the compressor (10) reflects white light, there is a possibility of the control unit (40) erroneously recognizing this portion, which is a reflecting portion (R), as a bubble. Thus, the control unit (40) compares the coordinates of the bubble candidate (C) in target image data (hereinafter referred to as first image data) with the coordinates of the bubble candidate (C) in previous image data (hereinafter referred to as second image data) obtained immediately before the first image data. When a condition indicating that the coordinates of the bubble candidate (C) have not changed in the two image data is satisfied, the control unit (40) excludes the bubble candidate (C) in the first image data from targets for specification of a bubble (step S25). When the condition in the step S19 is not satisfied, the control unit (40) maintains, as a target for specification of a bubble, the bubble candidate (C) in the first image data.

Meanwhile, differently from the bubble (B), the reflecting portion (R) of the compressor (10) or the like is moved in the water by the conveyance unit (25). Therefore, when the coordinate position of the first image data is obtained without consideration of the movement of the compressor (10) in the first direction (horizontal direction), a positional displacement between the first image data and the second image data increases and causes an erroneous determination in the step S19. Thus, in the step S18, the control unit (40) in the present embodiment corrects the position of the bubble candidate (C) in the first image data in consideration of a change in the position of the compressor (10) due to the movement of the compressor (10) in the horizontal direction.

Specifically, for example, the moving velocity of the compressor (10) is represented by v, and the interval of imaging operations of the camera (30) is represented by t. In this case, a change amount in the x coordinate of the bubble candidate (C) between the first image data and the second image data due to the movement of the compressor (10) can be expressed by $\Delta x = vt$. If the coordinates of a position P1 of the bubble candidate (C) in the first image data are (x1, y1), the coordinates after correction are (x1 - vt, y1). In the present example, the change amount $\Delta x$ (= vt) is used as a first index.

In the step S19, the control unit (40) compares the coordinates (x1 - vt, y1) of the position P1 of the bubble candidate (C) in the first image data after correction with the coordinates (x2, y2) of a position P2 of the bubble candidate (C) in the second image data. A displacement between the coordinate positions thereof can be expressed by [Formula 1] below.

[Formula 1]

$$\Delta P = \sqrt{((x1 - v \times t) - x2)^2 + (y1 - y2)^2}$$

In the step S19, when $\Delta P$ is smaller than a predetermined value, the control unit (40) excludes the bubble candidate (C) from targets for specification of a bubble (step S25). When $\Delta P$ is equal to or larger than the predetermined value, the control unit (40) maintains the bubble candidate (C) as a target for specification of a bubble. Here, the predetermined value is, for example, 10 pixels (corresponding to 1.4 mm/0.1 seconds). The predetermined value may be zero.

The step S18, the step S19, and the step S25 correspond to a first process in the present disclosure.

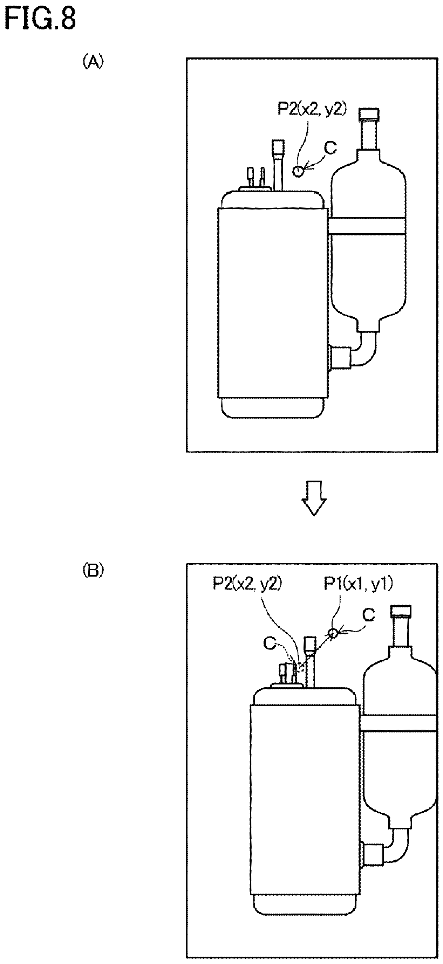

In a step S20, the control unit (40) determines whether the bubble candidate (C) rises. This is because when the bubble candidate (C) rises, there is a high possibility of the bubble candidate (C) being the bubble (B). In the step S20, for example as illustrated in Fig. 8, the control unit (40) compares the position P1 (refer to Fig. 8(B)) of the bubble candidate (C) in the first image data with the position P2 (refer to Fig. 8(A)) of the bubble candidate (C) in the second image data.

Specifically, the control unit (40) determines whether a condition 1 and/or a condition 2 below is satisfied. When both of the condition 1 and the condition 2 are satisfied, the control unit (40) in the present example sets, as a target for specification of the bubble (B), the bubble candidate (C) in the first image data. When one or both of the condition 1 and the condition 2 are not satisfied, the control unit (40) excludes the bubble candidate (C) in the first image data from targets for specification of the bubble (B) (step S25).

Condition 1) The control unit (40) compares the position P1 with the position P2 in the X-coordinate (horizontal direction). The control unit (40) determines whether the position of a coordinate x1 of the position P1 of the bubble candidate (C) in the first image data is within a predetermined range with respect to a coordinate x2 of the position P2 of the bubble candidate (C) in the second image data. Here, the predetermined range is the range of -50 pixels to +50 pixels (corresponding to -7 mm to +7 mm/0.1 seconds). Strictly, the position of the X coordinate of the bubble (B) does not change in continuous image data, even when the bubble (B) rises. However, in this determination, a slight displacement between the position P1 and the position P2 in the X coordinate is allowed in consideration of an error in imaging by the camera (30), an error in a process by the control unit (40), and the like.

Condition 2) The control unit (40) compares the position P1 with the position P2 in the Y coordinate (vertical direction). The control unit (40) determines whether a coordinate y1 of the position P1 of the bubble candidate (C) in the first image data is within a predetermined range with respect to a coordinate y2 of the position P2 of the bubble candidate (C) in the second image data. Here, the predetermined range is, for example, the range of 40 to 200 pixels (corresponding to 5.6 mm to 28 mm/0.1 seconds). In continuous image data, the bubble candidate (C) in the first image data moves above the bubble candidate (C) in the second image data when the bubble (B) rises. Therefore, the lower limit of this range is set to a predetermined value larger than 0. In addition, even when the bubble (B) moves upward, there is an upper limit in the rising speed thereof. Therefore, a predetermined upper limit value is also set in this range.

In a step S21, when a condition indicating that the luminance of the bubble candidate (C) in the first image data is close to the luminance of the bubble candidate (C) in the second image data is satisfied, the control unit (40) performs a second process of setting, as a target for specification of the bubble (B), the bubble candidate (C) in the first image data. Strictly, when this condition is satisfied, the control unit (40) determines that the bubble candidate (C) in the first image data is the bubble (B) (step S S22). In the step S21, when this condition is not satisfied, the bubble candidate (C) in the first image data is excluded from targets for specification of the bubble (B) (step S25).

Specifically, in the step S21, the control unit (40) compares, between the first image data and the second image data, the bubble candidate (C) in image data that has not been binarized. First, in the first image data, the circumscribed rectangle of the bubble candidate (C) is obtained, and this circumscribed rectangle is applied to the bubble candidate (C) in the second image data. Using the circumscribed rectangle as a reference, the control unit (40) sequentially obtains a concordance rate of each of pixels having identical coordinates in the first image data and the second image data. In the step S21, when the average of the concordance rates of all of the pixels in the circumscribed rectangle is 75% or more, the control unit (40) sets the bubble candidate (C) as a target for specification of the bubble (B). When the concordance rate is less than 75%, the control unit (40) determines that the bubble candidate (C) is the bubble (B).

When the bubble (B) is specified as described above, in a step S23, the control unit (40) associates an identical address with the bubble (B) specified in the first image data and the bubble (B) in the second image data corresponding to the bubble (B) specified in the first image data. These bubbles (B) have been determined to have the concordance rate of 75% or more in the step S21. By thus giving an address to the bubble (B) in each of image data, the identical bubble (B) can be specified in a plurality of the image data.

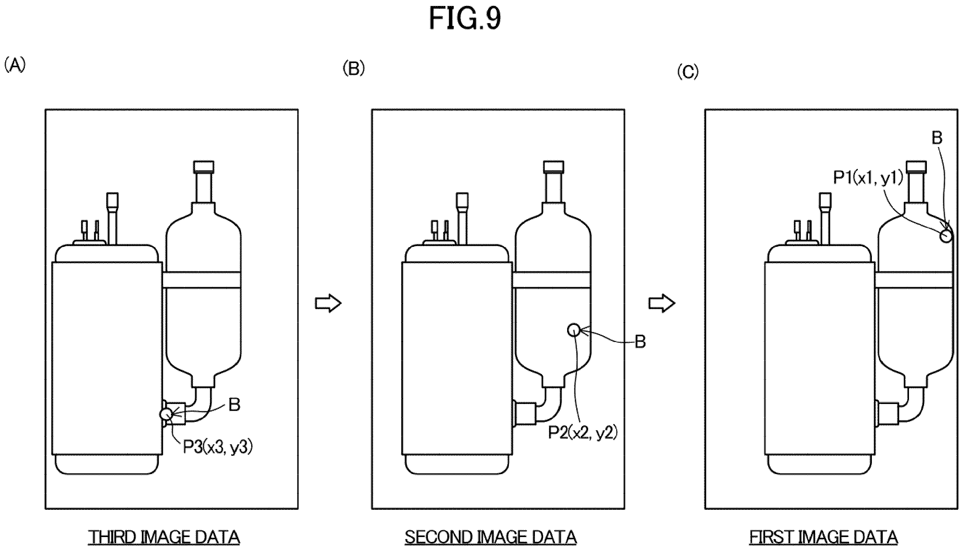

As illustrated in Fig. 5, when the control unit (40) determines that there is a leakage in a step S24, the control unit (40) specifies, in a step S31, the coordinates of the position of the bubble (B) that is present at a lowest position in the plurality of image data in which the bubble (B) is specified. As illustrated in Fig. 9, the control unit (40) in the present example specifies the coordinates of the position of the bubble (B) that is present at a lowest position in three continuous image data. Here, in these three image data, the bubble (B) in latest image data (first image data) and the bubble (B) in previous image data (second image data) obtained immediately before the first image data are given an identical address in the step S23. Similarly, the bubble (B) in the second image data and the bubble (B) in previous image data (third image data) obtained before the second image data are given an identical address in the step S23. Therefore, when the bubble (B) in the first image data can be specified, the bubble (B) in the previous third image data obtained immediately before the second image data can be specified, and a coordinate position P3 of the bubble (B) in the third image data can be obtained.

The coordinate position P3 (x3, y3) of the bubble (B) in the third image data is present below the coordinate position P1 (x1, y1) of the bubble (B) in the first image data and the coordinate position P2 (x2, y2) of the bubble (B) in the second image data. Therefore, the coordinate position P3 of the bubble (B) in the third image data serves as an index that indicates a portion where the bubble (B) is generated from the compressor (10).

In a step S32, the control unit (40) specifies a leakage point of the compressor (10) on the basis of the first data stored in the storage (41) and the coordinate position P3 of the bubble (B) in the third image data.

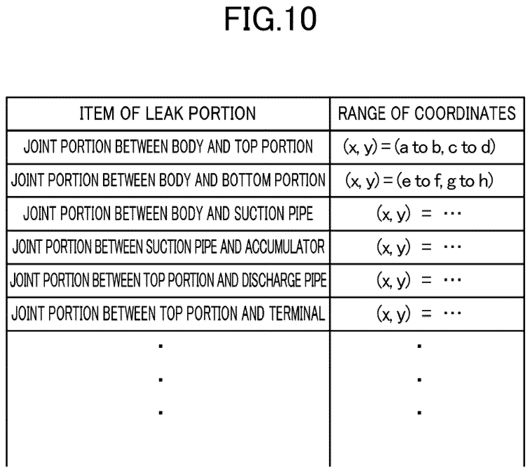

As illustrated in Fig. 10, in the first data, leakage points of the compressor (10) are associated with ranges of the coordinate positions (x, y) of the bubble (B) corresponding to the leakage points. Examples of items of the leakage points are a joint portion between the body (11a) of the casing (11) and the top portion (11c), a joint portion between the body (11a) of the casing (11) and the top portion (11c), a joint portion between the body (11a) of the casing (11) and the suction pipe (12), a joint portion between the suction pipe (12) and the accumulator (15), a joint portion between the top portion (11c) and the discharge pipe (13), a joint portion between the top portion (11c) and the terminal (14), and the like. The first data includes ranges of coordinates corresponding to these items.

In the step S32, the control unit (40) determines to which coordinate range in the first data the coordinate position P3 of the bubble (B) obtained in the step S31 belongs. For example, when the coordinate x of the bubble (B) obtained in the step S31 is in the range of a to b and the coordinate y thereof is in the range of c to d, the control unit (40) specifies the joint portion between the body (11a) and the top portion (11c) as a leakage point.

In a step S33, the control unit (40) outputs a first signal that includes information obtained in the preceding processes to the terminal device (45). The first signal includes information indicating that the compressor (10) has a leakage. In addition, the first signal includes information indicating that the bubble (B) is generated from the compressor (10), a coordinate position of the bubble (B), and a leakage point of the compressor (10).

When the first signal is input to the terminal device (45), the terminal device (45) notifies an operator of a leakage of the compressor (10) and generation of the bubble (B) from the compressor (10) by display on a screen, light, sound, or the like. In addition, the terminal device (45) displays, on the screen, a coordinate position of the bubble (B) and a leakage point of the compressor (10) in accordance with an operation by an operator. Consequently, the operator can be notified of a generation portion of the bubble (B) and a leakage point of the compressor (10). The terminal device may notify an operator of a generation portion of the bubble (B) and a leakage point of the compressor (10) by voice or the like.

(4) Features

(4-1) In the inspection system (20) in the embodiment, the conveyance unit (25) moves a plurality of the compressors (10) in the first direction (horizontal direction), and the camera (30) sequentially images the compressor (10) that passes through the imaging region (A). Therefore, specification of bubbles for the plurality of compressors (10) and determination of leakage points of the plurality of compressors (10) are continuously performed. Therefore, efficiency in inspections of the compressors (10) can be improved. Specifically, inspections of bubbles can be automated, and the manpower for inspection work can be saved.

(4-2)
The control unit (40) specifies the bubble (B) by using, as a parameter, the first index indicating a change in the position of the compressor (10) due to the movement of the compressor (10) in the first direction. Specifically, when a displacement between the positions of the bubble candidates (C) in two image data of the object (10) imaged by the camera (30) is within a predetermined range, the control unit (40) performs the first process of excluding the bubble candidates (C) in the two image data from targets for specification of the bubble (B). In the first process, on the basis of the first index, the control unit (40) corrects the position of the bubble candidate (C) in one of the two image data that is imaged later.

By thus correcting the position of the bubble candidate (C) in consideration of the movement of the compressor (10), as illustrated in Fig. 7, it is possible to suppress erroneous determination of the reflecting portion (R) as the bubble (B) due to the movement of a position (the reflecting portion (R)) of the compressor (10).

(4-3)
When a condition indicating that a luminance difference between the bubble candidates (C) in two image data of the object (10) imaged by the camera (30) is smaller than a predetermined value is satisfied, the control unit (40) performs the second process of setting, as targets for specification of the bubble (B), the bubble candidates (C) in the two image data. Consequently, the accuracy of specification of the bubble (B) can be improved.

(4-4)
The control unit (40) specifies a leakage point of the compressor (10) on the basis of a position of the bubble (B) that is present at a lowest position in a plurality of image data in which the identical bubble (B) is specified. When there are a plurality of image data in which the identical bubble (B) is specified, the position of the bubble (B) (for example, the bubble (B) in the third image data in Fig. 9) that is present at a lowest position is closest to a leakage point of the object (10). Therefore, the position of this bubble (B) is useful for specifying a leakage point of the object (10), which is the compressor (10).

Specifically, the control unit (40) specifies a leakage point of the object (10) on the basis of data in which positions of the bubble (B) and leakage points of the compressor (10) are associated with each other and the position of the bubble (B) that is present at a lowest position. Consequently, a leakage point of the compressor (10) can be accurately classified according to the position of the bubble (B).

(4-5)
The control unit (40) uses a CNN (Convolutional Neural Network) or template matching and specifies the bubble (B) that is generated from the compressor (10). With these determinations, it is possible to accurately specify the bubble (B) without performing binarization of image data.

(4-6)
There is included a notification unit (the terminal device (45)) that notifies that the bubble (B) is generated from the compressor (10) or that the compressor (10) has a leakage in response to specification of the bubble (B) by the control unit (40). Consequently, an inspector or the like can immediately grasp generation of a bubble from the compressor (10) and a leakage of the compressor (10). In addition, since the terminal device (45) notifies an inspector of a leakage point of the bubble (B), the inspector can take measures immediately.

(5) Other Embodiments

The object is not limited to a compressor and may be any object as long as a leakage point can be determined with a bubble.

The first direction in which the conveyance unit moves the object is not necessarily the horizontal direction and may be inclined with respect to the horizontal direction.

The conveyance unit may be a means that forms a water flow for moving the conveyance unit in water.

The imaging unit may be not a camera and may be an optical sensor.

While an embodiment and modifications have been described above, it should be understood that various changes in forms and details are available without deviating from the gist and the scope of the claims. In addition, the embodiment and the modifications described above and the other embodiments may be combined together or replaced, as appropriate, as long as functions to which the present disclosure is directed are involved.

The above-described terms "first", "second", "third"... are used form distinction between words to which these terms are added, and the terms are not intended to limit the number or order of the words.

Industrial Applicability

As described above, the present disclosure is useful for an inspection system and an inspection method.

Reference Signs List

| 10 | compressor (object) |
| 11 | casing |
| 20 | inspection system |
| 25 | conveyance unit |
| 30 | camera (imaging unit) |
| 40 | control unit |
| 45 | notification unit |

**Claims**

1.  An inspection system comprising:

    a conveyance unit (25) configured to move an object (10) in a first direction in water, the conveyance unit (25) moving a plurality of the objects (10);
    an imaging unit (30) configured to image the object (10) that is being conveyed by the conveyance unit (25); and
    a control unit (40) configured to specify, based on image data of the object (10) imaged by the imaging unit (30), a bubble (B) that is generated from the object (10).

2.  The inspection system according to claim 1,
    wherein the control unit (40) specifies the bubble (B) by using, as a parameter, a first index indicating a change in a position of the object (10) due to a movement of the object (10) in the first direction.

3.  The inspection system according to claim 2,
    wherein, when a displacement between positions of bubble candidates (C) in two image data of the object (10) imaged by the imaging unit (30) is within a predetermined range, the control unit (40) performs a first process of excluding the bubble candidates (C) in the two image data from targets for specification of the bubble (B), and, in the first process, the control unit (40) corrects based on the first index the position of the bubble candidate (C) in one of the two image data that is imaged later.

4.  The inspection system according to any one of claims 1 to 3,
    wherein, when a condition is satisfied, the condition indicating that a luminance difference between bubble candidates (C) in two image data of the object (10) imaged by the imaging unit (30) is smaller than a predetermined value, the control unit (40) performs a second process of setting, as targets for specification of the bubble (B), the bubble candidates (C) in the two image data.

5.  The inspection system according to any one of claims 1 to 4,
    wherein the control unit (40) specifies a leakage point of the object (10) based on a position of the bubble (B) that is present at a lowest position in a plurality of image data in which the identical bubble (B) is specified.

6. The inspection system according to claim 5,
wherein the control unit (40) specifies a leakage point of the object (10) based on data in which a position of the bubble (B) and a leakage point of the object (10) are associated with each other and the position of the bubble (B) that is present at the lowest position.

7. The inspection system according to any one of claims 1 to 6,
wherein the control unit (40) specifies the bubble (B) that is generated from the object (10) by using a CNN (Convolutional Neural Network) or template matching.

8. The inspection system according to any one of claims 1 to 7, comprising:
a notification unit (45) configured to notify that the bubble (B) is generated from the object (10) or that the object (10) has a leakage, in response to specification of the bubble (B) by the control unit (40).

9. The inspection system according to any one of claims 1 to 8,
wherein the conveyance unit (25) moves the object (10) in a horizontal direction as the first direction.

10. An inspection method comprising:

moving a compressor (10) in a first direction in water by a conveyance unit (25), the compressor (10) including a hermetically sealed casing (11);
imaging the object (10) by an imaging unit (30), the object (10) being conveyed by the conveyance unit (25); and
specifying a bubble (B) by a control unit (40) based on image data of the object (10) imaged by the imaging unit (30), the bubble (B) being generated from the object (10).

11. The inspection method according to claim 10, comprising:
specifying the bubble (B) by using, as a parameter, a first index indicating a change in a position of the compressor (10) due to a movement of the compressor (10) in the first direction.

# FIG.1

20

A

21

25

10    10    10

28    28    28

22

FIRST DIRECTION
(HORIZONTAL DIRECTION)

30

# FIG.2

FIRST DIRECTION
(HORIZONTAL DIRECTION)

# FIG.3

FIG.4

```
                        ┌─────────────┐
                        │    START    │
                        └─────────────┘
                               │
S11 ┌──────────────────────────────────────────────────┐
    │                    TRIMMING                        │
    └──────────────────────────────────────────────────┘
                               │
S12 ┌──────────────────────────────────────────────────┐
    │                  BINARIZATION                      │
    └──────────────────────────────────────────────────┘
                               │
S13 ┌──────────────────────────────────────────────────┐
    │           BUBBLE CANDIDATE EXTRACTION              │
    └──────────────────────────────────────────────────┘
                               │
S14  AREA IS WITHIN PREDETERMINED RANGE? ───── NO ────────►
                               │ YES
S15  ASPECT RATIO IS WITHIN PREDETERMINED RANGE? ── NO ───►
                               │ YES
S16  DETERMINED AS BUBBLE CANDIDATE BY LoG FILTER PROCESS? ── NO ──►
                               │ YES
S17 ┌──────────────────────────────────────────────────┐
    │   EXTRACT BUBBLE CANDIDATE BY CNN OR TEMPLATE      │
    │                 MATCHING                           │
    └──────────────────────────────────────────────────┘
                               │
S18 ┌──────────────────────────────────────────────────┐
    │      CORRECT COORDINATES OF BUBBLE CANDIDATE       │
    └──────────────────────────────────────────────────┘
                               │
S19  DISPLACEMENT BETWEEN POSITION OF BUBBLE CANDIDATE (AFTER
     CORRECTION) AND POSITION OF BUBBLE CANDIDATE IN IMMEDIATELY PREVIOUS
     IMAGE DATA IS SMALLER THAN PREDETERMINED VALUE? ──── YES ────►
                               │ NO
S20  CONDITION INDICATING THAT BUBBLE CANDIDATE RISES IS
     SATISFIED? ──────────────────────────────── NO ────►
                               │ YES
S21  CONDITION INDICATING THAT LUMINANCE OF BUBBLE CANDIDATE IS CLOSE TO
     LUMINANCE OF BUBBLE CANDIDATE IN IMMEDIATELY PREVIOUS IMAGE DATA IS
     SATISFIED? ──────────────────────────────── NO ────►
                               │ YES
S22 ┌──────────────────────────────────────────────────┐
    │       DETERMINE BUBBLE CANDIDATE AS BUBBLE         │
    └──────────────────────────────────────────────────┘
                               │
S23 ┌──────────────────────────────────────────────────┐
    │   GIVE IDENTICAL ADDRESS TO DETERMINED BUBBLE      │
    │        AND BUBBLE IN PAST IMAGE DATA               │
    └──────────────────────────────────────────────────┘
                               │
S24 ┌─────────────────┐
    │ LEAK IS PRESENT │
    └─────────────────┘
                               │
                            ( A )
```

S25
EXCLUDE BUBBLE CANDIDATE FROM TARGETS FOR SPECIFICATION OF BUBBLE

┌─────────────┐
│   RETURN    │
└─────────────┘

## FIG.5

A

S31 — OBTAIN COORDINATES OF BUBBLE IN THIRD IMAGE DATA OLDEST AMONG THREE IMAGES INCLUDING IDENTICAL BUBBLE (ADDRESS)

S32 — SPECIFY LEAK PORTION OF COMPRESSOR BASED ON FIRST DATA AND COORDINATES OF BUBBLE IN THIRD IMAGE DATA

S33 — OUTPUT FIRST SIGNAL TO TERMINAL DEVICE

## FIG.6

# FIG.7

(A)

(B)

# FIG.8

(A)

(B)

# FIG.9

(A)

THIRD IMAGE DATA

(B)

SECOND IMAGE DATA

(C)

FIRST IMAGE DATA

EP 4 368 957 A1

# FIG.10

| ITEM OF LEAK PORTION | RANGE OF COORDINATES |
|---|---|
| JOINT PORTION BETWEEN BODY AND TOP PORTION | $(x, y) = (a\ to\ b, c\ to\ d)$ |
| JOINT PORTION BETWEEN BODY AND BOTTOM PORTION | $(x, y) = (e\ to\ f, g\ to\ h)$ |
| JOINT PORTION BETWEEN BODY AND SUCTION PIPE | $(x, y) = \cdots$ |
| JOINT PORTION BETWEEN SUCTION PIPE AND ACCUMULATOR | $(x, y) = \cdots$ |
| JOINT PORTION BETWEEN TOP PORTION AND DISCHARGE PIPE | $(x, y) = \cdots$ |
| JOINT PORTION BETWEEN TOP PORTION AND TERMINAL | $(x, y) = \cdots$ |
| . . . | . . . |

## INTERNATIONAL SEARCH REPORT

| International application No. |
| --- |
| **PCT/JP2022/021800** |

| A. | CLASSIFICATION OF SUBJECT MATTER |
| --- | --- |

*G01M 3/06*(2006.01)i
FI: G01M3/06 G

According to International Patent Classification (IPC) or to both national classification and IPC

| B. | FIELDS SEARCHED |
| --- | --- |

Minimum documentation searched (classification system followed by classification symbols)
G01M3/00-3/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 003115/1974 (Laid-open No. 094979/1975) (TAKENAKA ELECTRONIC INDUSTRIAL CO., LTD.) 08 August 1975 (1975-08-08), page 1, line 10 to page 3, line 18, fig. 1-2 | 1, 4-5, 7-10 |
| Y | JP 2017-111077 A (DAIHATSU MOTOR CO., LTD.) 22 June 2017 (2017-06-22) paragraphs [0027], [0032]-[0045], fig. 1-2 | 1, 4-5, 7-10 |
| Y | JP 2021-061168 A (OSAKA GAS CO., LTD.) 15 April 2021 (2021-04-15) paragraph [0040] | 7-8 |
| Y | JP 2009-019972 A (DENSO CORP.) 29 January 2009 (2009-01-29) paragraph [0028] | 7-8 |
| Y | JP 2009-063596 A (MIRAI IND. CO., LTD.) 26 March 2009 (2009-03-26) paragraph [0030] | 8 |
| A | JP 11-218461 A (FUJIKURA LTD.) 10 August 1999 (1999-08-10) | 1-11 |
| A | JP 2016-080609 A (HITACHI-GE NUCLEAR ENERGY, LTD.) 16 May 2016 (2016-05-16) | 1-11 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 July 2022** | **09 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/021800**

| Patent document cited in search report | | | Publication date (day/month/year) | Patent family member(s) | Publication date (day/month/year) |
|---|---|---|---|---|---|
| JP | 50-094979 | U1 | 08 August 1975 | (Family: none) | |
| JP | 2017-111077 | A | 22 June 2017 | (Family: none) | |
| JP | 2021-061168 | A | 15 April 2021 | (Family: none) | |
| JP | 2009-019972 | A | 29 January 2009 | US 2009/0013767 A1 paragraph [0027] | |
| JP | 2009-063596 | A | 26 March 2009 | (Family: none) | |
| JP | 11-218461 | A | 10 August 1999 | (Family: none) | |
| JP | 2016-080609 | A | 16 May 2016 | (Family: none) | |

Form PCT/ISA/210 (patent family annex) (January 2015)

**EP 4 368 957 A1**

**REFERENCES CITED IN THE DESCRIPTION**

**Patent documents cited in the description**

- JP 2018155682 A